# FASCICULE DE BREVET EUROPEEN

(11) **EP 2 694 408 B1**
(45) Date de publication et mention de la délivrance du brevet: **12.08.2015**
(21) Numéro de dépôt: 12711668.9
(22) Date de dépôt: 04.04.2012
(51) Int. Cl.: B65G 1/14, B65G 49/06

(54) **DISPOSITIF DE MANUTENTION ADAPTABLE**
ANPASSBARE HANDHABUNGSVORRICHTUNG
ADAPTABLE HANDLING DEVICE

(30) Priorité: 06.04.2011 BE 201100207
(43) Date de publication de la demande: 12.02.2014
(73) Titulaire: AGC Glass Europe, 1348 Louvain-la-Neuve (BE)
(72) Inventeur: ZUCCARINI, Valeriano, B-6040 Jumet (BE)
(74) Mandataire: Bayot, Daisy
(86) Numéro de dépôt international: PCT/EP2012/056121
(87) Numéro de publication internationale: WO 2012/136683

(56) Documents cités:
- DE-U1- 20 301 136
- US-A1- 2007 272 633

## Description

La présente invention se rapporte au dispositif de manutention selon le préambule de la revendication 1.

### Etat de la technique

Il est courant pour un client d'un transporteur, de prendre en charge les frais pour acheminer le fret à une destination donnée ainsi que les frais liés à un retour à vide du moyen de transport. Ceci s'applique tant pour un transport sur route, par exemple par camion seul, que pour un transport multimodal combinant l'utilisation d'un camion et d'un train.

Une telle situation résulte souvent de la nature du fret transporté. En effet, des frets différents sont souvent conditionnés de différentes manières et nécessitent par conséquent des supports différents pour leur chargement dans ou sur des moyens de transport. Ces supports sont dans de nombreux cas adaptés pour un conditionnement donné et incompatibles pour le transport d'un autre type de conditionnement. Ces supports doivent cependant être ramenés au lieu de départ. Le transporteur se trouve ainsi dans l'obligation d'effectuer un voyage retour à vide.

Une telle situation peut être observée par exemple pour le transport de panneaux de verre PLF (Plateau à Largeur de Four ou Fabrication) qui nécessite des supports particuliers du genre chevalets, garantissant l'immobilisation des panneaux. Ces supports ne sont en revanche pas adaptés à d'autres produits ou à d'autres conditionnements de produits tels que des caisses ou des caisses-palettes.

Des dispositifs pliables existent (US 2007272633 A1), réduisant leur encombrement lors du transport à vide. Cependant ils ne permettent pas de transporter autre chose que des objets sous forme de plaque, feuille ou panneaux. De ce fait, le retour de ces dispositifs à l'expéditeur se fait toujours à vide, sans charge. Le document US 2007272633 A1 divilgue un dispositif de manutention selon le préambule de la revendication 1.

Les retours à vide sont problématiques tant sur le plan économique qu'environnemental.

### Divulgation de l'invention

L'objet de la présente invention vise par conséquent à remédier aux inconvénients précités et à proposer un nouveau dispositif de manutention permettant de s'adapter à différents conditionnements.

Un autre objet de la présente invention vise à modifier de façon simple et économique un dispositif de manutention connu, pour s'affranchir de certaines incompatibilités d'utilisation.

Les objets assignés à l'invention sont atteints à l'aide d'un dispositif de manutention pour un conditionnement de produits, du genre panneaux de grandes dimensions, ledit dispositif comportant les caractéristiques de la revendication 1.

Selon un exemple de réalisation du dispositif de préhension conforme à l'invention, les moyens de support sont escamotables ou amovibles.

Selon un autre exemple de réalisation du dispositif de préhension conforme à l'invention, que les cales sont escamotables ou amovibles.

Selon un exemple de réalisation du dispositif de préhension conforme à l'invention, les moyens de support comprennent au moins deux segments de poutrelles parallèles, s'étendant sur la partie horizontale, le long de la structure montante.

Selon un exemple de réalisation, le dispositif de préhension conforme à l'invention comprend un moyen pour modifier l'écartement des segments de poutrelles, de manière à pouvoir s'adapter à des conditionnements complémentaires de dimensions différentes.

Selon un exemple de réalisation du dispositif de préhension conforme à l'invention, les moyens de solidarisation sont utilisés pour fixer sur la face d'appui les conditionnements complémentaires reposant sur les moyens de support et sur ladite face d'appui.

Selon un exemple de réalisation du dispositif de préhension conforme à l'invention, les moyens de support sont adaptés pour supporter des conditionnements complémentaires sous forme de caisses-palettes.

Selon un exemple de réalisation le dispositif de préhension conforme à l'invention comprend des organes de fixation du genre sangles, pour fixer les caisses-palettes sur la partie horizontale ou sur les moyens de support.

Selon un exemple de réalisation le dispositif de préhension conforme à l'invention permet de supporter un ou plusieurs empilements de caisses-palettes lesquelles sont aptes au gerbage.

Les objets assignés à l'invention sont également atteints à l'aide d'un chevalet pour le support et le transport de produits en verre PLF, ledit chevalet constituant un dispositif de manutention tel que présenté ci-dessus.

Le dispositif de manutention conforme à l'invention présente l'avantage de permettre une adaptation à différents types de conditionnements de marchandises et/ou produits et d'éviter ainsi dans un certain nombre de cas des retours à vide des moyens de transport.

Par ailleurs, la nouvelle conception des dispositifs de manutention conformes à l'invention, non limités à un usage spécifique, permet de diminuer le nombre desdits dispositifs en exploitation.

### Brève description des dessins

D'autres caractéristiques de la présente invention apparaîtront plus clairement à la lecture de la description qui va suivre, faite en référence au dessin annexé, dans lequel:
- la figure 1 illustre schématiquement selon une vue de profil un exemple de réalisation d'une structure de base d'un dispositif de manutention conforme à l'invention, ladite structure de base étant commune pour toutes les configurations d'utilisation,
- la figure 2 illustre schématiquement selon une vue de profil, l'exemple de réalisation du dispositif de manutention de la figure 1 dans une première configuration, adaptée pour supporter par exemple un empilement de panneaux,
- la figure 3 illustre schématiquement selon une vue de profil, l'exemple de réalisation du dispositif de manutention de la figure 1 dans une seconde configuration, adaptée pour supporter par exemple un gerbage de caisses-palettes,
- la figure 4a illustre schématiquement un détail de la figure 3, selon une vue de profil,
- la figure 4b illustre schématiquement un détail de la figure 2, selon une vue de profil,
- la figure 5 représente, selon une vue partielle en perspective et en éclaté, un exemple de réalisation d'un dispositif de manutention conforme à l'invention dans la seconde configuration,
- la figure 6 représente selon une vue en perspective du dispositif de manutention de la figure 5, supportant un gerbage de caisses-palettes,
- la figure 7 représente, selon une vue agrandie et en perspective d'un exemple de réalisation du dispositif de manutention conforme à l'invention dans sa première configuration,
- et la figure 8 représente le dispositif de manutention de la figure 7, selon une vue de profil.

### Mode(s) de réalisation de l'invention

Les éléments structurellement et fonctionnellement identiques, présents sur plusieurs figures distinctes, sont affectés d'une même référence numérique ou alphanumérique.

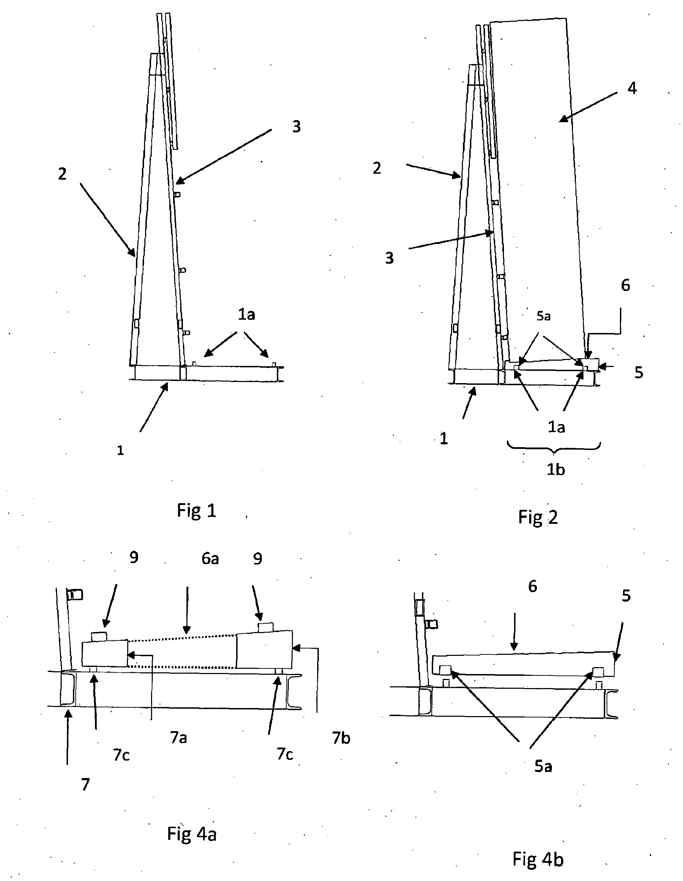

Le dispositif de manutention conforme à l'invention et représenté par exemple aux figures 1, 2 et 3 comporte une structure de base 1 et une structure montante 2 solidaire de la structure de base 1.

La structure montante 2 présente une face d'appui 3 sensiblement inclinée, laquelle est destinée à constituer un appui pour des panneaux 4 par exemple en verre PLF, tel que cela est montré à la figure 2.

Les panneaux 4 reposent avec leur chant inférieur sur la structuré de base 1 par l'intermédiaire d'au moins deux cales 5. Les faces supérieures inclinées des cales 5 définissent un plan d'appui incliné 6. La face d'appui 3 est sensiblement orthogonale au plan d'appui incliné 6.

Le dispositif comprend également des moyens, non représentés, pour solidariser les panneaux 4 au moins avec la structure montante 2. Ces moyens de solidarisation comprennent par exemple des sangles ou tout autre moyen de fixation adapté.

La structure de base 1 comporte avantageusement sur une partie horizontale 1b s'étendant le long et à côté de la structure montante 2, des plots de positionnement 1a pour coopérer avec des logements 5a ménagés sur la face inférieure des cales 5. Ces dernières sont illustrées plus en détails à la figure 4b. Il est bien entendu possible d'utiliser un nombre de cales 5 supérieur à deux, lorsque la masse des panneaux 4 l'exige.

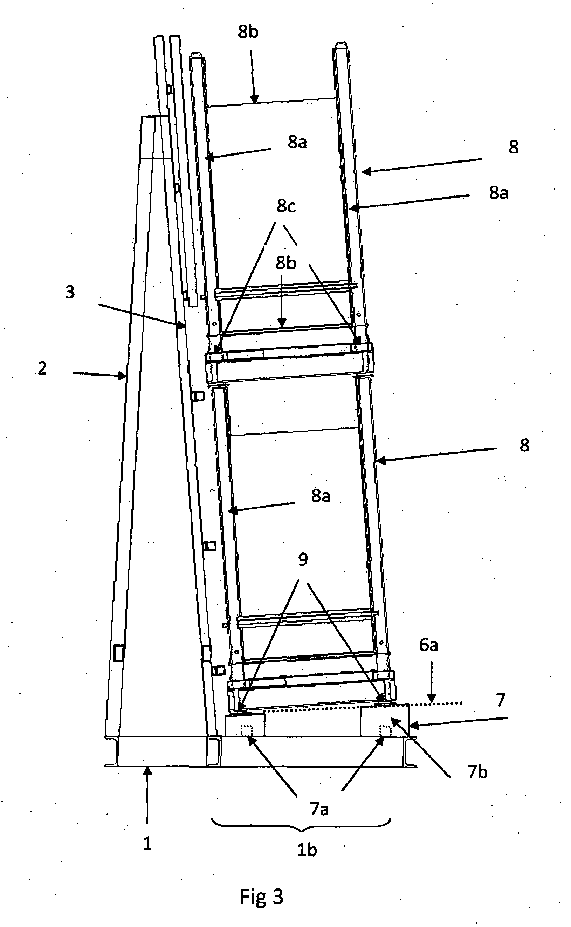

Le dispositif de manutention comprend également des moyens de support 7 pour supporter et fixer par exemple un ensemble de caisses-palettes 8 en remplacement des panneaux 4. Une telle configuration est par exemple illustrée à la figure 3.

Les moyens de support 7 sont montés sur la partie horizontale 1b en remplacement des cales 5.

Selon un exemple de réalisation du dispositif, représenté aux figures 4a, 5 et 6, les moyens de support 7 comprennent au moins deux segments de poutrelles 7a et 7b parallèles. Ces segments de poutrelles 7a et 7b s'étendent sur la partie horizontale 1 b et le long de la structure montante 2.

Les segments de poutrelle 7a et 7b comportent logements de positionnement 7c destinés à s'engager sur les plots de positionnement 1a. La fixation des segments de poutrelles 7a et 7b sur la structure horizontale 1 b est assurée par tous moyens connus.

Les segments de poutrelle 7a et 7b présentent respectivement des faces supérieures dont l'inclinaison par rapport à l'horizontale permet de définir un plan d'appui et de positionnement 6a sensiblement orthogonal à la face d'appui 3. Le segment de poutrelle 7b présente à cet effet des dimensions plus importantes que le segment de poutrelle 7a.

Selon un exemple de réalisation conforme à l'invention, le dispositif de manutention comprend un moyen pour modifier l'écartement des segments de poutrelles 7a et 7b, de manière à pouvoir s'adapter à des conditionnements, par exemple des caisses-palettes 8, de dimensions différentes. Cet écartement peut varier dans une certaine limite de façon à ne pas altérer l'appui des caisses-palettes 8 d'une part sur la face d'appui 3 et d'autre part sur chacun de segments 7a et 7b.

Selon une variante conforme à l'invention, le dispositif de manutention peut comprendre un jeu d'au moins deux segments de poutrelles 7b présentant des hauteurs différentes. La hauteur du segment de poutrelle 7b détermine ainsi un écartement optimal par rapport à l'autre segment de poutrelle 7a. Il est alors possible de s'adapter à des dimensionnements plus étendus des caisses-palettes 8.

Dans l'exemple de réalisation de la figure 3, les moyens de support 7 remplacent les cales 5 pour constituer le plan d'appui et de positionnement 6a adapté aux caisses palettes 8.

Selon un autre exemple de réalisation du dispositif de manutention conforme à l'invention, les moyens de support 7 peuvent être constitués de cales dont la face supérieure est pourvue d'ergots de positionnement. Un tel exemple de réalisation peut trouver son application dans des situation où aucune adaptation aux dimensions des conditionnements complémentaires n'est nécessaire.

Chaque caisse-palette 8 comporte par exemple quatre piquets d'angle verticaux 8a reliés entre eux par des traverses horizontales 8b.

Selon un exemple de réalisation préférentiel du dispositif de manutention conforme à l'invention, les moyens de support 7 et les cales 5 sont montés sur la partie horizontale 1 b de la structure de base 1, de manière amovible. Les moyens de support 7 et les cales 5 sont par conséquent interchangeables. La partie horizontale 1 b constitue donc une partie adaptable de la structure de base 1.

Les moyens de support 7 illustrés plus en détails à la figure 4a comportent avantageusement des organes de positionnement 9 coopérant avec les caisses-palettes 8 pour garantir leur positionnement optimal. Les organes de positionnement 9 sont par exemple constitués de plots ou d'ergots de centrage en saillie sur les moyens de support 7. Ces plots de centrage sont donc destinés à s'engager dans des ouvertures de positionnement de forme correspondante, ménagées dans les extrémités basses des piquets d'angle 8a de chaque caisse-palette 8 disposée sur la structure de base 1.

Chaque piquet d'angle 8a présente avantageusement une extrémité haute pourvu d'un plot de positionnement 8c apte à s'engager dans une ouverture de positionnement correspondante d'un autre piquet d'angle 8a lorsque des caisses-palettes 8 sont gerbées.

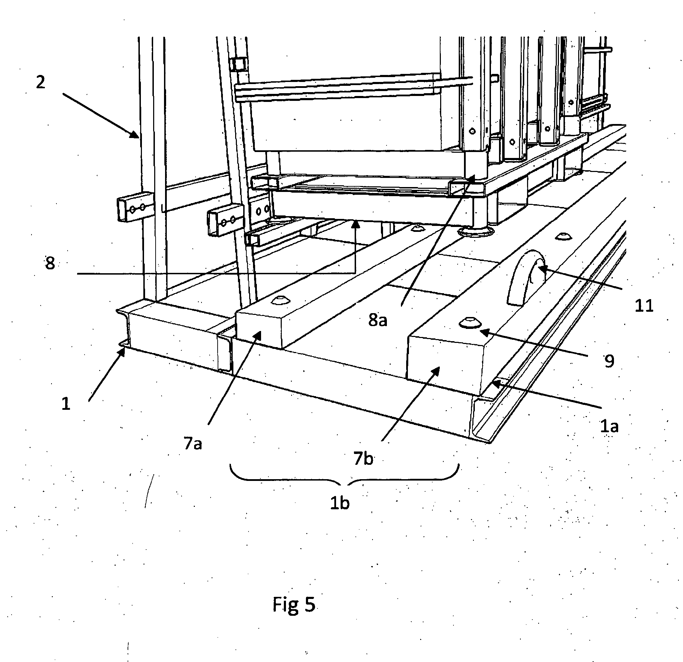

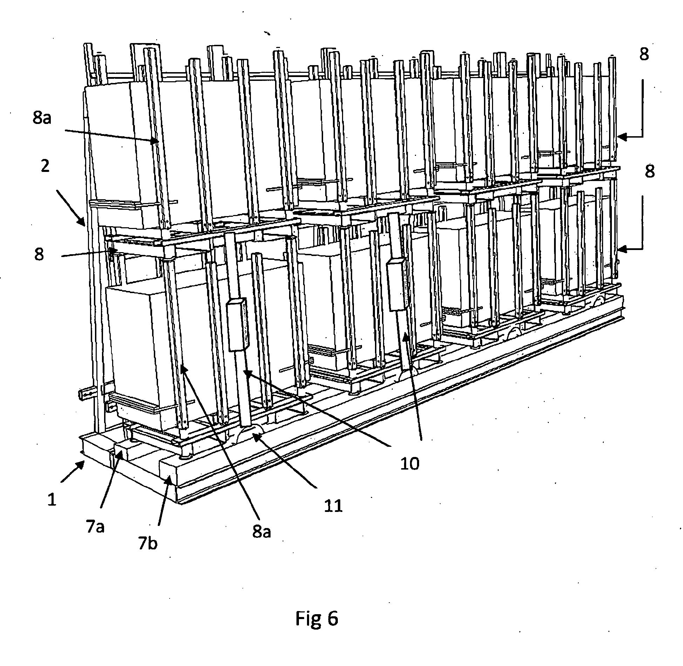

Les moyens de support 7 comprennent avantageusement des organes de fixation, du genre sangles 10, pour immobiliser les caisses-palettes 8 sur les moyens de support 7 ou sur la partie horizontale 1 b. Dans les exemples de réalisation des figures 5 et 6, les organes de fixation comprennent des boucles 11 fixées sur les segments de poutrelles 7a et 7b et destinées à l'accrochage des sangles 10.

Le dispositif de manutention conforme à l'invention permet de supporter un ou plusieurs empilements de caisses-palettes 8 aptes au gerbage. A titre d'exemple un dispositif de manutention peut supporter un empilement de deux rangées de caisses-palettes 8 pour le transport. Ces dernières sont positionnées les unes sur les autres par gerbage. Pour le stockage, il est même possible d'empiler trois rangées de caisses-palettes 8.

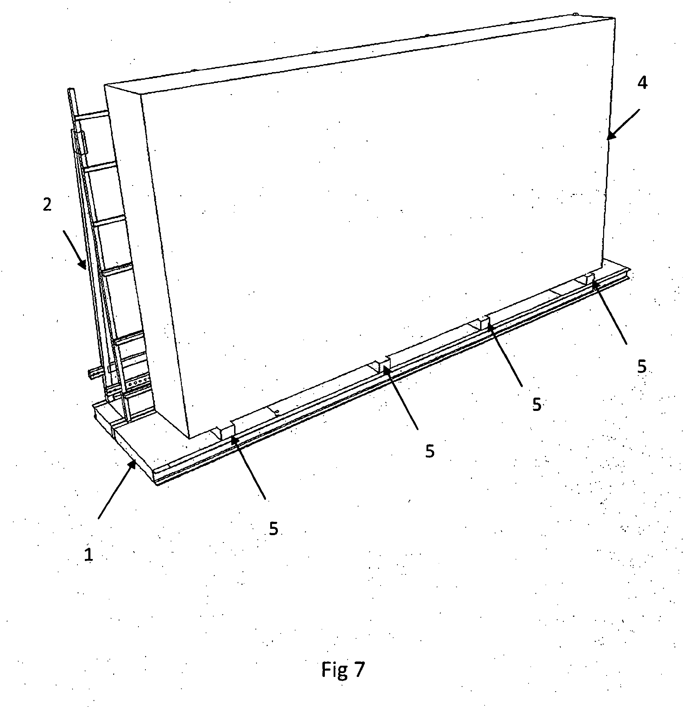

La figure 7 représente, selon une vue agrandie et en perspective, un exemple de réalisation du dispositif de manutention conforme à l'invention dans sa première configuration d'utilisation. Dans cette configuration, le dispositif de manutention constitue un chevalet supportant de façon connue, un panneau 4 de verre PLF.

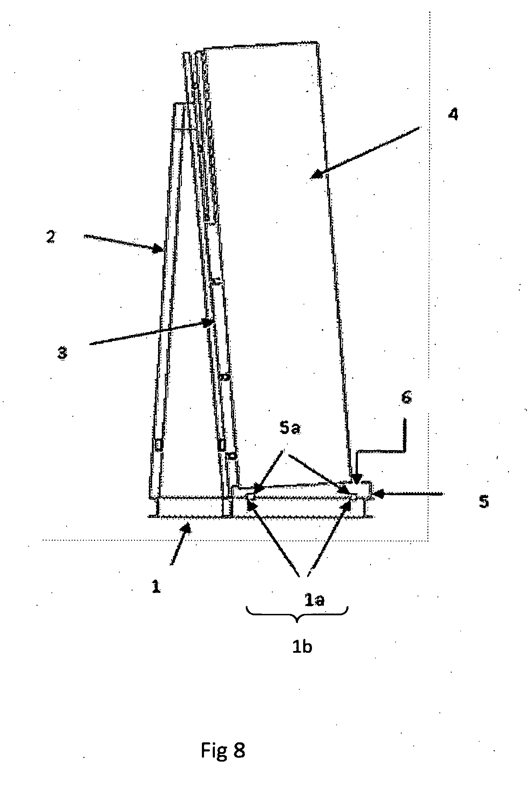

La figure 8 représente le dispositif de manutention de la figure 7, selon une vue de profil. Le panneau 4 prend avantageusement appui sur les cales 5 et sur la face d'appui 3 délimitée par la structure montante 2.

## Revendications

1. Dispositif de manutention pour un conditionnement de produits du genre panneaux (4) de grandes dimensions, ledit dispositif comportant une structure de base (1) laquelle comprend d'une part une structure montante (2) présentant une face d'appui (3) sensiblement inclinée et d'autre part une partie horizontale (1b) solidaire de la structure montante (2) et s'étendant le long et à côté de la structure montante (2), au moins deux cales (5) montées sur la partie horizontale (1b),
**caractérisé en ce que** les faces supérieures définissent un plan d'appui incliné (6) orthogonal à la face d'appui (3), ledit dispositif comportant égaiement des moyens de solidarisation pour fixer, au moins sur la structure montante (2), le conditionnement reposant sur le plan d'appui incliné (6) et sur la face d'appui (3), ledit dispositif comportant des moyens de support (7) interchangeables avec les cales (5) pour supporter au moins un conditionnement complémentaire d'autres produits, lesdits moyens de support (7) étant montés sur la partie horizontale (1b) et présentant des faces supérieures inclinées et pourvues d'organes de positionnement (9) de manière à définir un plan d'appui et de positionnement (6a) orthogonal à la face d'appui (3) et adapté au conditionnement complémentaire.

2. Dispositif de manutention selon la revendication 1, **caractérisé en ce que** les moyens de support (7) sont escamotables ou amovibles.

3. Dispositif de manutention selon la revendication 1 ou 2, **caractérisé en ce que** les les cales (5) sont escamotables ou amovibles.

4. Dispositif de manutention selon l'une quelconque des revendications 1 à 3, **caractérisé en ce que** les moyens de support (7) comprennent au moins deux segments de poutrelles (7a,7b) parallèles, s'étendant sur la partie horizontale (1b), le long de la structure montante (2).

5. Dispositif de manutention selon la revendication 4, **caractérisé en ce qu'**il comprend un moyen pour modifier l'écartement des segments de poutrelles (7a,7b), de manière à pouvoir s'adapter à des conditionnements complémentaires de dimensions différentes.

6. Dispositif de manutention selon l'une quelconque des revendications 1 à 5, **caractérisé en ce que** les moyens de solidarisation sont utilisés pour fixer sur la face d'appui (3) le conditionnement complémentaire reposant sur les moyens de support (7) et sur ladite face d'appui (3).

7. Dispositif de manutention selon l'une quelconque des revendications 1 à 6, **caractérisé en ce que** les moyens de support (7) sont adaptés pour supporter des conditionnements complémentaires sous forme de caisses-palettes (8).

8. Dispositif de manutention selon la revendication 7, **caractérisé en ce qu'**il comprend des organes de fixation du genre sangles (10), pour fixer les caisses-palettes (8) sur la partie horizontale (1 b) ou sur les moyens de support (7).

9. Dispositif de manutention selon la revendication 7 ou 8, **caractérisé en ce qu'**il permet de supporter un ou plusieurs empilements de caisses-palettes (8) lesquelles sont aptes au gerbage.

10. Chevalet pour le support et le transport de produits en verre PLF, **caractérisé en ce qu'**il constitue un dispositif de manutention conforme à l'une quelconque des revendications 1 à 9.

## Patentansprüche

1. Handhabungsvorrichtung zur Verpackung von plattenartigen Produkten (4) mit großen Abmessungen, wobei die Vorrichtung eine Basisstruktur (1), die einerseits eine aufrechte Struktur (2) mit einer im Wesentlichen geneigten Anlagefläche (3) und andererseits einen horizontalen Teil (1b), der mit der aufrechten Struktur (2) fest verbunden ist und sich entlang und neben der aufrechten Struktur (2) erstreckt, umfasst, mindestens zwei Keile (5), die am horizontalen Teil (1b) angebracht sind, umfasst, **dadurch gekennzeichnet, dass** die oberen Flächen der Keile eine geneigte Anlageebene (6) orthogonal zur Anlagefläche (3) definieren, wobei die Vorrichtung auch Befestigungsmittel zur Fixierung der an der geneigten Anlageebene (6) und an der Anlagefläche (3) liegenden Verpackung zumindest an der aufrechten Struktur (2) umfasst, wobei die Vorrichtung mit den Keilen (5) austauschbare Stützmittel (7) zum Stützen mindestens einer zusätzlichen Verpackung von anderen Produkten umfasst, wobei die Stützmittel (7) an dem horizontalen Teil (1b) angebracht sind und obere geneigte Flächen aufweisen, die mit Positionierungselementen (9) versehen sind, um eine Anlage- und Positionierungsebene (6a) zu definieren, die orthogonal zur Anlagefläche (3) ist und an die zusätzliche Verpackung angepasst ist.

2. Handhabungsvorrichtung nach Anspruch 1, **dadurch gekennzeichnet, dass** die Stützmittel (7) einziehbar oder abnehmbar sind.

3. Handhabungsvorrichtung nach Anspruch 1 oder 2, **dadurch gekennzeichnet, dass** die Keile (5) einziehbar oder abnehmbar sind.

4. Handhabungsvorrichtung nach einem der Ansprüche 1-3, **dadurch gekennzeichnet, dass** die Stützmittel (7) mindestens zwei Segmente paralleler Träger (7a, 7b) umfassen, die sich über den horizontalen Teil (1b) entlang der aufrechten Struktur (2) erstrecken.

5. Handhabungsvorrichtung nach Anspruch 4, **dadurch gekennzeichnet, dass** sie ein Mittel zur Modifizierung des Abstandes der Segmente der Träger (7a,7b) zur Ermöglichung der Anpassung an zusätzliche Verpackungen mit unterschiedlichen Abmessungen umfasst.

6. Handhabungsvorrichtung nach einem der Ansprüche 1-5, **dadurch gekennzeichnet, dass** die Befestigungsmittel zur Fixierung der auf den Stützmitteln (7) und der Anlagefläche (3) liegenden zusätzlichen Verpackung an der Anlagefläche (3) verwendet werden.

7. Handhabungsvorrichtung nach einem der Ansprüche 1-6, **dadurch gekennzeichnet, dass** die Stützmittel (7) zum Stützen zusätzlicher Verpackungen in Form von Boxpaletten (8) ausgeführt sind.

8. Handhabungsvorrichtung nach Anspruch 7, **dadurch gekennzeichnet, dass** sie gurtartige Fixierungselemente (10) zur Fixierung der Boxpaletten (8) am horizontalen Teil (1b) oder an den Stützmitteln (7) umfasst.

9. Handhabungsvorrichtung nach Anspruch 7 oder 8, **dadurch gekennzeichnet, dass** sie ermöglicht, dass ein oder mehrere Stapel von stapelbaren Boxpaletten (8) gestützt werden.

10. Stütz- und Transportbock für Produkte aus PLF-Glas, **dadurch gekennzeichnet, dass** er eine Handhabungsvorrichtung nach einem der Ansprüche 1-9 bildet.

## Claims

1. Handling device for packaging products of the large-size panels (4) type, the said device comprising a base structure (1) which comprises, on the one hand, an upright structure (2) having a substantially inclined bearing face (3) and, on the other hand, a horizontal part (1b) secured to the upright structure (2) and extending along and beside the upright structure (2), and at least two wedges (5) mounted on the horizontal part (1b), **characterized in that** the upper faces of the wedges define an inclined bearing plane (6) orthogonal to the bearing face (3), the said device also comprising securing means for fixing, at least on the upright structure (2), the packaging resting on the inclined bearing plane (6) and on the bearing face (3), the said device comprising support means (7) interchangeable with the wedges (5) for supporting at least one additional packaging of other products, the said support means (7) being mounted on the horizontal part (1b) and having inclined upper faces provided with positioning members (9) so as to define a bearing and positioning plane (6a) orthogonal to the bearing face (3) and adapted to the additional packaging.

2. Handling device according to Claim 1, **characterized in that** the support means (7) are retractable or removable.

3. Handling device according to Claim 1 or 2, **characterized in that** the wedges (5) are retractable or removable.

4. Handling device according to any one of Claims 1 to 3, **characterized in that** the support means (7) comprise at least two segments of parallel beams (7a, 7b) extending over the horizontal part (1b) along the upright structure (2).

5. Handling device according to Claim 4, **characterized in that** it comprises a means for modifying the spacing of the segments of beams (7a, 7b) so as to be able to adapt to additional packagings of different dimensions.

6. Handling device according to any one of Claims 1 to 5, **characterized in that** the securing means are used to fix on the bearing face (3) the additional packaging resting on the support means (7) and on the said bearing face (3).

7. Handling device according to any one of Claims 1 to 6, **characterized in that** the support means (7) are adapted to support additional packagings in the form of box pallets (8).

8. Handling device according to Claim 7, **characterized in that** it comprises fixing members of the straps (10) type for fixing the box pallets (8) on the horizontal part (1b) or on the support means (7).

9. Handling device according to Claim 7 or 8, **characterized in that** it makes it possible to support one or more stacks of box pallets (8) which are able to be stacked.

10. Trestle for supporting and transporting PLF glass products, **characterized in that** it constitutes a handling device according to any one of Claims 1 to 9.
